# FASCICULE DE BREVET EUROPEEN

(11) **EP 1 632 134 B1**
(45) Date de publication et mention de la délivrance du brevet: **02.05.2007**
(21) Numéro de dépôt: 05291848.9
(22) Date de dépôt: 07.09.2005
(51) Int. Cl.: A22B 5/20

(54) **Galets de guidage pour installation de fendage des carcasses d'animaux**
Führungsrollen für eine Vorrichtung zum Spalten von Schlachttierkörpern
Guide rollers for an animal carcass splitting device

(30) Priorité: 07.09.2004 FR 0409461
(43) Date de publication de la demande: 08.03.2006
(73) Titulaire: Durand International, 07210 Baix (FR)
(72) Inventeur: Torrelli, Didier, 07130 Saint Peray (FR)
(74) Mandataire: Breese Derambure Majerowicz

(56) Documents cités:
- EP-A- 0 801 900
- EP-A- 1 125 501
- US-B2- 6 607 431

## Description

La présente invention concerne des galets de guidage pour installation de fendage de carcasses d'animaux, et plus particulièrement un ensemble de tels galets comprenant une paire de galets supérieurs et une paire de galets inférieurs, chaque galet étant monté fou autour de son axe, un galet de chaque paire étant disposé par rapport à l'autre galet de la même paire symétriquement par rapport à un même plan de symétrie, les galets d'au moins une des paires de galets étant de forme générale tronconique et les axes des galets de cette paire de galets étant inclinés par rapport audit plan de symétrie de sorte qu'ils divergent en direction des sommets des troncs de cônes.

On connaît de tels galets ainsi agencés par les document EP-A-1 125 501 ou US-A-6 607 431.

Bien que donnant généralement satisfaction, ces agencements ne procurent pas toujours un fendage d'une qualité optimale en fin de fendage, au niveau des échines.

La présente invention vise à pallier ces inconvénients.

Plus particulièrement, l'invention a pour but de fournir des galets de guidage et une installation de fendage qui procurent un fendage de qualité sur toute la hauteur de la carcasse.

A cet effet, l'invention a tout d'abord pour objet un ensemble de galets de guidage pour installation de fendage de carcasses d'animaux, comprenant une paire de galets supérieurs et une paire de galets inférieurs, chaque galet étant monté fou autour de son axe, un galet de chaque paire étant disposé par rapport à l'autre galet de la même paire symétriquement par rapport à un même plan de symétrie, les galets d'au moins une des paires de galets étant de forme générale tronconique et les axes des galets de cette paire de galets étant inclinés par rapport audit plan de symétrie de sorte qu'ils divergent en direction des sommets des troncs de cônes, les axes des galets de l'autre paire de galets étant sensiblement confondus et perpendiculaires audit plan de symétrie.

Dans un mode de réalisation particulier de l'invention, lesdits galets de ladite autre paire de galets sont de forme générale tronconique, dont le sommet est dirigé vers ledit plan de symétrie.

Egalement dans un mode de réalisation particulier, lesdits galets sont montés sur un palonnier de forme générale en X, avec un galet monté à l'extrémité de chacune des branches dudit palonnier, chaque galet de ladite autre paire de galets étant monté sur ledit palonnier par l'intermédiaire d'une équerre dont un bras est fixé audit palonnier et dont l'autre bras reçoit l'axe dudit galet.

L'invention a également pour objet une installation de fendage de carcasses d'animaux comprenant un ensemble de galets de guidage tel que décrit ci-dessus.

On décrira maintenant, à titre d'exemple non limitatif, un mode de réalisation particulier de l'invention, en référence aux dessins schématiques annexés dans lesquels :

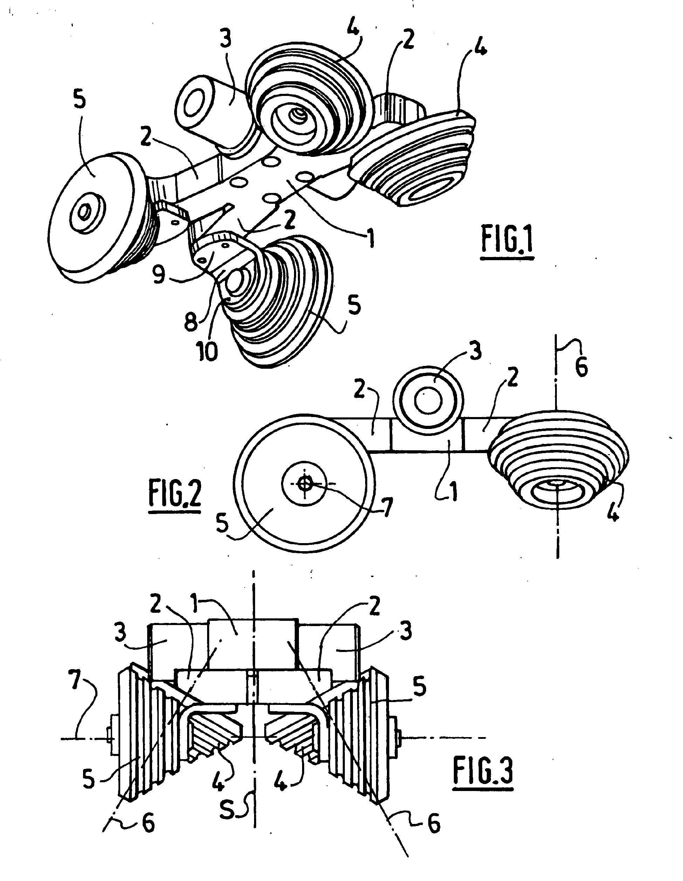

- la figure 1 est une vue en perspective d'un ensemble de galets selon un mode de réalisation de l'invention ;
- la figure 2 en est une vue de côté ; et
- la figure 3 en est une vue de face.

On voit sur les figures un palonnier 1 en forme de X supportant un galet de guidage à l'extrémité de chacune de ses branches 2. L'ensemble du palonnier 1 et des galets est symétrique par rapport à un plan de symétrie S correspondant, en utilisation, au plan sagittal de la carcasse en cours de fendage. Le corps du palonnier 1 porte par ailleurs deux tourillons 3 coaxiaux et symétriques par rapport au plan S pour permettre de façon connue son montage articulé à l'extrémité d'un bras de support (non représenté) d'une installation de fendage, à scie ou à couteaux.

Les deux galets de la paire de galets supérieurs 4 sont symétriques l'un de l'autre par rapport au plan S. De même, les deux galets de la paire de galets inférieurs 5 sont symétriques l'un de l'autre par rapport au plan S.

Les quatre galets 4 et 5 sont ici tous de forme générale tronconique. Ils sont montés sur le palonnier 1 fous chacun autour de son axe.

Dans le cas présent, les galets inférieurs 4 ont leurs axes 6 inclinés par rapport au plan de symétrie S. Cette inclinaison est telle que les axes divergent en direction des sommets des troncs de cônes constitués par les galets 4.

En revanche, les galets supérieurs 5 ont leurs axes 7 sensiblement confondus et perpendiculaires au plan S. Les sommets des troncs de cônes constitués par les galets 5 sont dirigés vers le plan S. Les galets 5 pourraient d'ailleurs être montés sur un même arbre.

Chaque galet 4 est monté de façon connue à l'extrémité de la branche respective du palonnier 1.

Les galets 5 sont ici montés sur le palonnier 1 par l'intermédiaire d'équerres 8. Chacune de ces équerres a un de ses bras 9 vissé à l'extrémité de la branche respective du palonnier 1 tandis que son autre bras 10 support l'axe de rotation du galet 5.

En variante, les galets 5 pourraient être montés directement sur le palonnier.

En variante également, le palonnier pourrait être en forme de H.

## Revendications

1. Ensemble de galets de guidage pour installation de fendage de carcasses d'animaux, comprenant une paire de galets supérieurs (5) et une paire de galets inférieurs (4), chaque galet étant monté fou autour de son axe (6, 7), un galet de chaque paire étant disposé par rapport à l'autre galet de la même paire symétriquement par rapport à un même plan de symétrie (S), les galets (4) d'au moins une des paires de galets étant de forme générale tronconique et les axes (6) des galets de cette paire de galets étant inclinés par rapport audit plan de symétrie de sorte qu'ils divergent en direction des sommets des troncs de cônes, **caractérisé par le fait que** les axes (7) des galets (5) de l'autre paire de galets sont sensiblement confondus et perpendiculaires audit plan de symétrie.

2. Ensemble de galets selon la revendication 1, dans lequel lesdits galets (5) de ladite autre paire de galets sont de forme générale tronconique, dont le sommet est dirigé vers ledit plan de symétrie.

3. Ensemble de galets selon l'une quelconque des revendications 1 et 2, dans lequel lesdits galets sont montés sur un palonnier (1) de forme générale en X, avec un galet monté à l'extrémité de chacune des branches dudit palonnier, chaque galet (5) de ladite autre paire de galets étant monté sur ledit palonnier par l'intermédiaire d'une équerre (8) dont un bras (9) est fixé audit palonnier et dont l'autre bras (10) reçoit l'axe dudit galet.

4. Installation de fendage de carcasses d'animaux, **caractérisée par le fait qu**'elle comprend un ensemble de galets de guidage selon l'une quelconque des revendications 1 à 3.

## Claims

1. Set of guiding rollers for installation of animal carcass splitting device including a pair of upper rollers(5) and a pair of lower rollers (4), each roller assembled freely around its axis (6, 7), a roller of each pair symmetrically placed compared to the other roller of the same pair compared to a same plane of symmetry (S), the rollers (4) of, at least, one of the rollers pairs being generally truncated-shaped and the axis (6) of this rollers pair being inclined compared to the same plane of symmetry so as they diverge towards the tops of the truncated cones, **characterized by** the fact that the axis (7) of the rollers (5) of the other pair of rollers are approximately merged and perpendicular to the said plane of symmetry.

2. Set of rollers according to claim 1, in which the said rollers (5) of the said other pair of rollers are generally truncated-shaped, whose top is forwarded towards the said plane of symmetry.

3. Set of rollers according to one of unspecified claims 1 and 2, in which the said rollers are assembled on a rudder bar (1) usually X-shaped, with a roller assembled on each extremity of each branch of the said rudder bar, each roller (5) of the said other pair of rollers being assembled on the said rudder bar, through an angle iron (8) whose one arm (9) is assembled to the said rudder bar and whose other arm (10) receives the axis of the said roller.

4. Installation of animal carcass splitting device **characterized by** the fact that it includes a set of guiding rollers according to any of the claims 1 to 3.

## Patentansprüche

1. Ein Satz Führungsrollen für Installation auf Spalteinrichtungen für Schlachttiere, einschließend ein Satz obere Rollen (5) und ein Satz untere Rollen (4), jede Rolle ist freibeweglich um seinen Achse montiert (6,7), da eine Rolle von jedem Satz symmetrisch zur anderen Rolle des gleichen Satz aufgestellt ist, zu einem gleichen Symmetrieplan (S), die Rollen (4) von mindestens eine der Rollen von diesem Rollensatz sind generell kegelstrumpfartig und die Achse (6) der Rollen von diesem Satz Rollen sind geneigt zum genannten Symmetrieplan, damit sie auseinander laufen in Richtung der Gipfel der Kegelkörper, charakterisiert durch den Fakt, dass die Achse (7) der Rollen (5) von dem genannten Rollensatz merklich verschmolzen und senkrecht zum genannten Symmetrieplan.

2. Satz Rollen gemäß Anspruch 1, in dem die genannten Rollen (5) von dem anderen Satz Rollen generell kegelstrumpfartiger Form sind, dessen Gipfel gerichtet ist nach dem genannten Symmetrieplan.

3. Satz Rollen gemäß einer irgendeiner der Ansprüche 1 und 2, in dem die genannten Rollen auf einem Pendelarm (1) montiert sind, generell X-förmig, mit einer Rolle montiert am Ende von jeder Stange des genannten Pendelarm, jede Rolle (5) des genannten anderen Satz ist auf dem genannten Pendelarm montiert durch ein Winkel (8) dessen Arm (9) fixiert ist auf dem genannten Pendelarm, und dessen anderen Arm (10) den Achse der genannten Rolle bekommt.

4. Spalteinrichtung von Tierkörper, charakterisiert durch den Fakt, dass sie einschließt ein Satz Führungsrollen, gemäß eine von irgendeiner der Ansprüche 1 bis 3.
